# EUROPEAN PATENT SPECIFICATION

(11) **EP 2 749 473 B1**
(45) Date of publication and mention of the grant of the patent: **01.11.2017**
(21) Application number: 12825782.1
(22) Date of filing: 02.08.2012
(51) Int. Cl.: B62B 9/08

(54) **WHEEL HOLDING MECHANISM FOR BABY CARRIAGE, AND BABY CARRIAGE**
RADHALTEMECHANISMUS FÜR KINDERWAGEN UND KINDERWAGEN
MÉCANISME DE MAINTIEN DE ROUES POUR LANDAU, ET LANDAU ASSOCIÉ

(30) Priority: 25.08.2011 JP 2011183828
(43) Date of publication of application: 02.07.2014
(73) Proprietor: Combi Corporation, Tokyo 111-0041 (JP)
(72) Inventor: FUNAKURA Kenji, Tokyo 111-0041 (JP)
(74) Representative: Liesegang, Eva
(86) International application number: PCT/JP2012/069715
(87) International publication number: WO 2013/027552

(56) References cited:
- EP-A1- 0 858 940
- DE-A1-102007 044 834
- DE-U1- 29 818 659
- GB-A- 150 387
- GB-A- 2 434 419
- JP-A- 2005 014 894
- JP-U- S5 367 247
- JP-U- S5 367 247
- JP-U- S5 878 276
- JP-U- S6 240 070
- JP-Y- S 126 308

## Description

### TECHNICAL FIELD

The present invention relates to a wheel holding mechanism for use in a stroller, and more particularly to a stroller wheel holding mechanism which makes it possible to stably inhibit the rotation of a wheel. The present invention also relates to a stroller which makes it possible to stably inhibit the rotation of a wheel.

### BACKGROUND ART

A leg of a stroller, at its lower end, is provided with a wheel holding mechanism (wheel holding device) for rotatably holding a wheel. The stroller wheel holding mechanism generally has a braking mechanism for inhibiting the rotation of the wheel in order to prevent unintentional movement of the stroller.

Atypical example of a braking mechanism is disclosed in JP 9-277938A and JP 2005-14894A. The braking mechanism disclosed in JP 9-277938A and JP 2005-14894A includes a large number of protrusions (engagement receiving portions 25 in JP 9-277938A and ribs 33 in JP 2005-14894A) extending radially around the axis of rotation of a wheel, and a brake pin (stopper 30 in JP 9-277938A and an engagement member 31 in JP 2005-14894A) held movably only in a predetermined direction. In the braking mechanism, the brake pin approaches the protrusions radially inward and enters the space between two adjacent protrusions, whereby the rotation of the wheel can be inhibited.

EP 0 858 940 A1 describes a stroller wheel holding mechanism comprising a wheel shaft, a wheel mounted to the wheel shaft and a braking member through which the wheel shaft penetrates and which is slidable with respect to the wheel shaft in an axial direction of the wheel shaft. The braking member comprises a flared portion and a contoured body which are engaged with each other wherein the flared portion is moved over and around the contoured body.

However, the conventional stroller has the following problems: The brake pin can collide with the top of a protrusion depending on the rotational position of the wheel. Therefore, in order to inhibit the rotation of the wheel and brake the stroller, it is necessary, in addition to the operation of the brake pin, to adjust the rotational position of the wheel in advance so that the brake pin can enter the space between two adjacent protrusions.

Further, in the conventional braking mechanism, the rotation of a wheel is inhibited by engagement between the brake pin and the protrusions, both having a fine structure. Depending on the weight of a baby or infant riding in the stroller, the location of the stroller, etc., a large load can be applied to the brake pin and a protrusion. In such a case, it is possible, depending on the load, that the brake pin may be unintentionally disengaged from the protrusion, or that the brake pin or the protrusion could even be damaged.

### DISCLOSURE OF THE INVENTION

The present invention has been made in view of the above situation. It is therefore an object of the present invention to provide a stroller wheel holding mechanism which makes it possible to more stably inhibit the rotation of a wheel, and to provide a stroller which makes it possible to more stably inhibit the rotation of a wheel.

The present invention provides a stroller wheel holding mechanism according to claim 1; a stroller according to claim 11; and a stroller according to claim 13. Embodiments of the invention are defined in the dependent claims.

A stroller wheel holding mechanism according to the present invention comprises: a wheel shaft; a wheel mounted to the wheel shaft; and a braking member through which the wheel shaft penetrates and which is slidable with respect to the wheel shaft in the axial direction of the wheel shaft, wherein the braking member, by its sliding movement in the axial direction of the wheel shaft, is movable between a position where the braking member is apart from the wheel and a position where the braking member is in contact with the wheel and inhibits the rotation of the wheel.

In the stroller wheel holding mechanism according to the present invention, a surface of the braking member, facing the wheel in the axial direction of the wheel shaft, may be configured as an uneven surface composed of a number of raised portions which, when viewed in the axial direction of the wheel shaft, extend radially around the wheel shaft. In the wheel holding mechanism, the cross-sectional shape of each raised portion in a cross-section perpendicular to the direction of the extension of the raised portion may be a triangle having an apex projecting toward the wheel. In the wheel holding mechanism, the cross-sectional shape of each raised portion in a cross-section perpendicular to the direction of the extension of the raised portion may have an apex projecting toward the wheel and having an apex angle of less than 90°.

In the stroller wheel holding mechanism according to the present invention, a surface of the wheel, facing the braking member in the axial direction of the wheel shaft, may be configured as an uneven surface composed of a number of raised portions which, when viewed in the axial direction of the wheel shaft, extend radially around the wheel shaft. In the wheel holding mechanism, the cross-sectional shape of each raised portion in a cross-section perpendicular to the direction of the extension of the raised portion may be a triangle having an apex projecting toward the braking member. In the wheel holding mechanism, the cross-sectional shape of each raised portion in a cross-section perpendicular to the direction of the extension of the raised portion may have an apex projecting toward the braking member and having an apex angle of less than 90°.

In the stroller wheel holding mechanism according to the present invention, said surface of the braking member, facing the wheel in the axial direction of the wheel shaft, and said surface of the wheel, facing the braking member in the axial direction of the wheel shaft, may be configured as complementary uneven surfaces capable of engaging each other in a circumferential area around the wheel shaft.

In the stroller wheel holding mechanism according to the present invention, the wheel may include a wheel body, and an adapter mounted to the wheel body, and the adapter forms said surface of the wheel, facing the braking member in the axial direction of the wheel shaft.

The stroller wheel holding mechanism according to the present invention may further comprise an operating member located in a position in contact with the braking member on the opposite side of the braking member from the wheel in the axial direction of the wheel shaft. The operating member is movable in a direction intersecting the axial direction of the wheel shaft and, by the movement of the operating member in said direction, the braking member in contact with the operating member can slide on the wheel shaft in the axial direction and approach the wheel. In the wheel holding mechanism, the wheel shaft may penetrate through the operating member. In the wheel holding mechanism, at least one of the operating member and the braking member may have, as a contact surface to make contact with the other member, an inclined portion inclined with respect to both the movement direction of the operating member and the sliding direction of the braking member.

In the stroller wheel holding mechanism according to the present invention, the braking member may be biased in a direction away from the wheel and parallel to the axial direction of the wheel shaft.

The stroller wheel holding mechanism according to the present invention may further comprise a casing for housing the braking member. The casing may have an opening formed in a position facing the braking member. A portion of the wheel, which is to make contact with the braking member, may be inserted into the opening and disposed in the casing.

A stroller according to the present invention comprises: a handle; a front leg and a rear leg; and any one of the above-described wheel holding mechanisms according to the present invention, mounted to at least one of the front leg and the rear leg.

The stroller according to the present invention may further comprise a remote control lever swingably mounted to the handle, and an operation transmission means provided between the remote control lever and the wheel holding mechanism so as to enable switching between braking of the rotation of the wheel and release of the braking by means of the remote control lever. The wheel may be in the non-braked state when the remote control lever is in a position extending in the longitudinal direction of the handle.

A stroller according to the present invention may comprise: a handle; and a front leg and a pair of rear legs, wherein one of the pair of rear legs is provided with a first wheel holding mechanism, which is any one of the above-described wheel holding mechanisms according to the present invention, and the other one of the pair of rear legs is provided with a second wheel holding mechanism, which is any one of the above-described wheel holding mechanisms according to the present invention, wherein an auxiliary transmission means is provided between the first wheel holding mechanism and the second wheel holding mechanism, and wherein the rotation of the wheel of the second wheel holding mechanism is inhibited upon braking of the rotation of the wheel of the first wheel holding mechanism, and the braking of rotation of the wheel of the second wheel holding mechanism is released upon release of the braking of rotation of the wheel of the first wheel holding mechanism.

The present invention makes it possible to more stably inhibit the rotation of a wheel.

### BRIEF DESCRIPTION OF THE DRAWINGS

FIG. 1 is a perspective view of a stroller and stroller wheel holding mechanisms, illustrating an embodiment of the present invention;
FIG. 2 is a perspective view of the right wheel holding mechanism shown in FIG. 1;
FIG. 3 is a schematic diagram showing the construction of the wheel holding mechanisms shown in FIG. 1 when the rotation of the wheels is not inhibited;
FIG. 4 is a schematic diagram showing the construction of the wheel holding mechanisms shown in FIG. 1 when the rotation of the wheels is inhibited;
FIG. 5 is an exploded perspective view of main constituent elements of the wheel holding mechanism of FIG. 2;
FIG. 6 is a diagram showing some constituent elements of the wheel holding mechanism of FIG. 5 as viewed in the axial direction of a wheel shaft;
FIG. 7 is a plan view of a braking member of the wheel holding mechanism of FIG. 5;
FIG. 8 is a cross-sectional view taken along the line VIII-VIII of FIG. 7;
FIG. 9 is a perspective view of the wheel of the wheel holding mechanism of FIG. 2; and
FIG. 10 is a cross-sectional view taken along the line X-X of FIG. 9.

### BEST MODE FOR CARRYING OUT THE INVENTION

Preferred embodiments of the present invention will now be described with reference to the drawings.

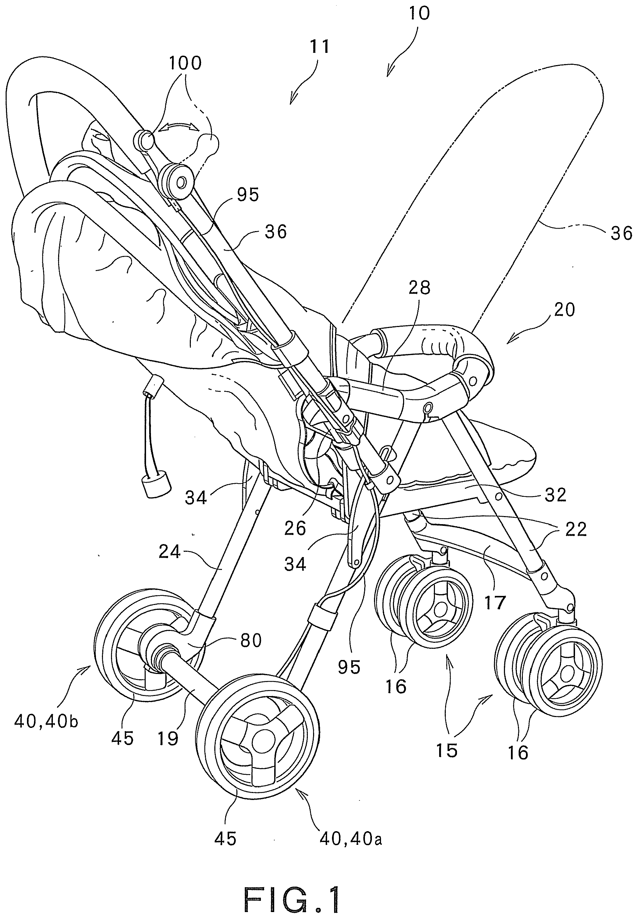

FIGS. 1 through 10 are diagrams illustrating a stroller and a wheel holding mechanism (wheel holding device) according to an embodiment of the present invention. FIG. 1 shows the overall construction of the stroller. The stroller 10 shown in FIG. 1 comprises a stroller body 11 including a frame portion 20, having a pair of front legs 22 and a pair of rear legs 24, and a push-handle 36 swingably coupled to the frame portion 20. A caster 15 for rotatably and pivotably holding wheels (front wheels) 16 is mounted to the lower end of each front leg 22 of the stroller body 11. On the other hand, a wheel holding mechanism (wheel holding device) 40 for rotatably holding a wheel (rear wheel) 45 is mounted to the lower end of each rear leg 24 of the stroller body 11. The wheel holding mechanism 40 has a braking mechanism for inhibiting the rotation of the wheel as will be described in detail below.

In the stroller 10 of this embodiment, the handle 36 is configured to be swingable with respect to the frame portion 20. The handle 36 can be fixed in a backside pushing position as shown by the solid lines in FIG.1 and in a face-to-face pushing position as shown by the two-dot chain line in FIG. 1. A known construction, e.g. the construction disclosed in JP 2008-254688A, can be employed to make the handle 36 swingable with respect to the frame portion 20, and therefore a detailed description thereof is herein omitted.

In this embodiment the stroller 10 is configured to be foldable as is widely spread and as disclosed e.g. in JP 2008-254688A. The following is a specific example of the construction of the stroller 10.

The stroller body 11 (stroller 10) is constructed approximately symmetrically with respect to a laterally central plane extending in the front-rear direction. As shown in FIG. 1, the frame portion 20 in this embodiment has a pair of right/left front legs 22, a pair of right/left rear legs 24, a pair of right/left armrests 28, and a pair of right/left coupling members 26 (first linking elements). The upper end of each front leg 22 is pivotably (swingably) coupled to the armrest 28 disposed on the corresponding side (right side or left side). Similarly, the upper end of each rear leg 24 is pivotably (swingably) coupled to the armrest 28 disposed on the corresponding side (right side or left side). Further, an upper portion of each coupling member 26 is pivotably (swingably) coupled to a rear portion of the armrest 28 disposed on the corresponding side (right side or left side).

The frame portion 20 further has a left side member connecting the left front leg and the left coupling member, and a right side member 32 connecting the right front leg 22 and the right coupling member 26. Each side member (second linking member) 32, in its front portion, is pivotably coupled to an intermediate portion of the front leg 22 and, in its rear portion, is pivotably coupled to a lower portion of the coupling member 26. In the illustrated embodiment, the side members 32 are comprised of side portions of a plate-like member disposed between the pair of front legs 22 and the pair of rear legs 24. Thus, the left side member and the right side member 32 are formed integrally.

The frame portion 20 further has a left bracket connecting the left rear leg and the left coupling member, and a right bracket 34 connecting the right rear leg 24 and the right coupling member 26. Each bracket (third linking member) 34, in its one portion, is pivotably (swingably) coupled to an intermediate portion of the rear leg 24 and, in the other portion, is pivotably (swingably) coupled to a lower portion of the coupling member 26.

The handle 36 is swingably coupled to the frame portion 20 having the above construction. Each end of the U-shaped handle 36 is pivotably (swingably) coupled to the bracket 34 on the corresponding side. The axis of pivot (center of swing) of the handle 36 with respect to the brackets 34 coincides with the axis of pivot of the brackets 34 with respect to the coupling members 26 and with the axis of pivot of the coupling members 26 with respect to the side members 32. The handle 36 in the backside pushing position is pivotably coupled to the armrests 28 or the coupling members 26.

A footrest 17, connecting the pair of front legs 22, and a rear connecting member 19, connecting the pair of wheel holding mechanisms 40, are provided as members extending in the lateral direction (width direction) of the stroller 10.

The stroller 10 having the above overall construction can be folded by pivoting the constituent members with respect to each other. In particular, the handle 36 in the backside pushing position is once pulled up and then pushed down, thereby pivoting the brackets 34 with respect to the rear legs 24 counterclockwise in FIG. 1. In conjunction with this operation, the armrests 28 and the side members 32 pivot with respect to the coupling members 26 counterclockwise in FIG. 1. Consequently, in a side view, the handle 36 and the front legs 22 approach each other and become approximately parallel to each other, and the position of the handle 36 lowers. The stroller 10 can be folded in this manner, whereby the size of the stroller can be reduced in the front-rear direction and in the up-down direction. On the other hand, the stroller 10 in the folded state can be unfolded by performing the opposite operations.

The terms "front", "rear", "upper" and "lower" used for the stroller herein refer to "front", "rear", "upper" and "lower" as viewed from an infant riding in the stroller 10 in the unfolded state, unless otherwise specified. Therefore, the "front-rear direction" of the stroller 10 corresponds to a diagonal right-up direction in FIG. 1. The term "front" refers to the side that the infant in the stroller 10 faces, unless otherwise specified. Thus, the front side of the stroller 10 corresponds to the right side of the stroller in FIG. 1. The "up-down direction" of the stroller 10 refers to a direction perpendicular to the front-rear direction and, in addition, perpendicular to the ground underneath the stroller 10. Thus, when the ground surface is a horizontal surface, the "up-down direction" represents a vertical direction. The "lateral direction" refers to the width direction perpendicular to both the front-rear direction and the up-down direction.

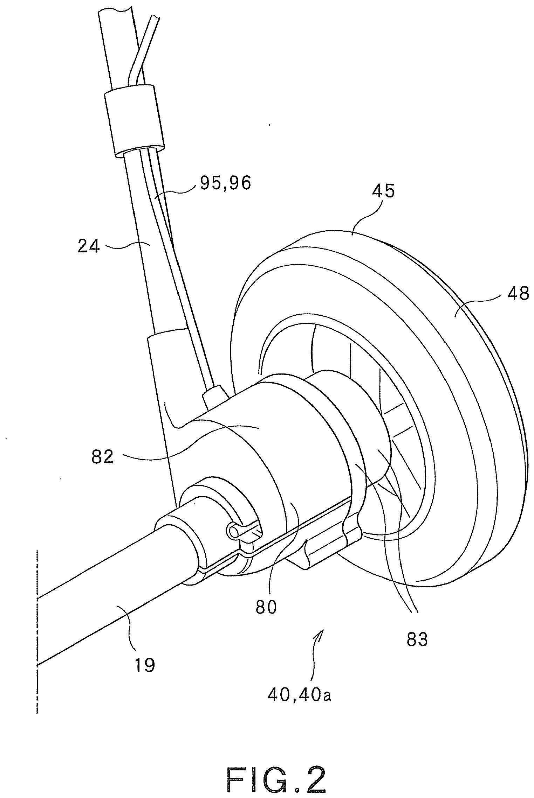

The wheel holding mechanisms 40 will now be described mainly with reference to FIGS. 2 through 8.

As shown in FIG. 1, the right wheel holding mechanism 40a is mounted to the lower end of the right rear leg 24, and the left wheel holding mechanism 40b is mounted to the lower end of the left rear leg 24. Though the two wheel holding mechanisms 40a, 40b are constructed symmetrically, they comprise the same constituent elements: their respective constructions to perform a braking function are essentially the same. Therefore, the construction of the wheel holding mechanisms 40, together with their operation, will be described herein with reference to the drawings, showing the right wheel holding mechanism 40a mounted to the right rear leg 24, while giving a description of a difference(s) between the right and left wheel holding mechanisms 40a, 40b, as necessary. When making no distinction between the right wheel holding mechanism 40a and the left wheel holding mechanism 40b, they are correctively referred to herein as the "wheel holding mechanism 40".

As described above, the wheel holding mechanism (wheel holding device) 40 has a wheel (rear wheel) 45 which is held rotatably, and includes a braking mechanism for inhibiting the rotation of the wheel 45. The following is the detail of the construction of the wheel holding mechanism 40.

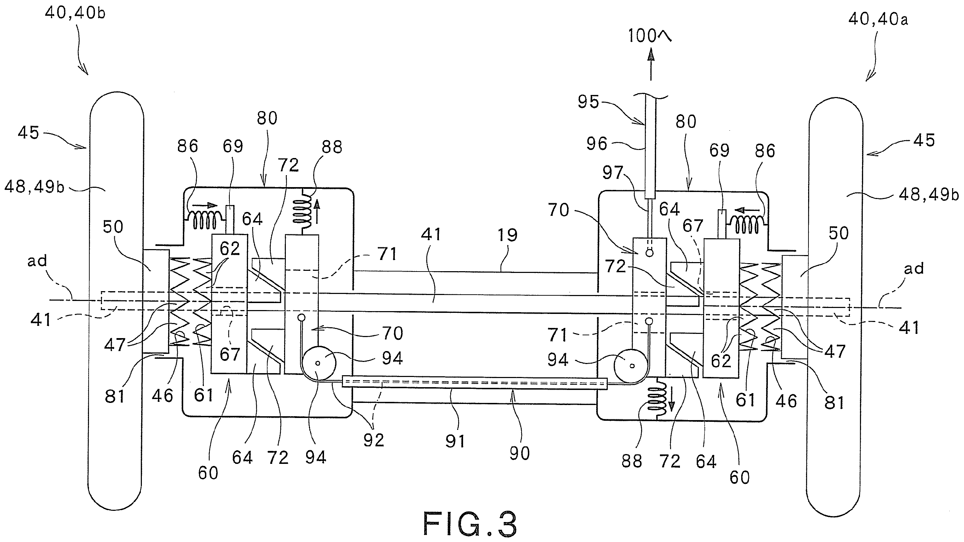

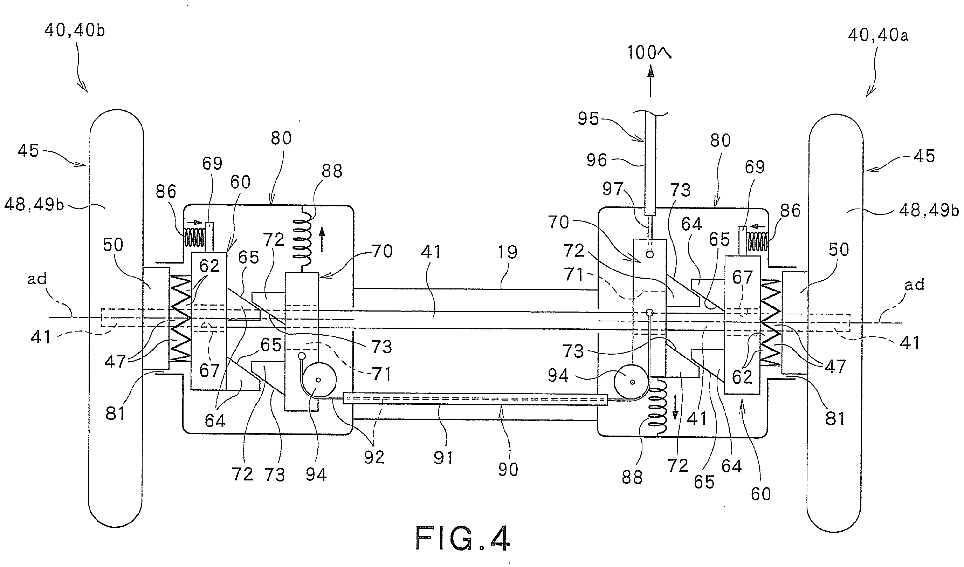

As well shown in FIGS. 3 and 4, the wheel holding mechanism 40, mounted to the lower end of each rear leg 24, includes a wheel shaft 41, a wheel 45 mounted to the wheel shaft 41, and a braking member 60 through which the wheel shaft 41 penetrates. The wheel 45 is configured to be rotatable on the axis of the wheel shaft 41. The braking member 60 is configured to be slidable with respect to the wheel shaft 41 in the axial direction "ad" of the wheel shaft 41. The braking member 60, by its sliding movement in the axial direction of the wheel shaft 41, is movable between a non-braking position (position of FIG. 3) where the braking member 60 is apart from the wheel 45 and a braking position (position of FIG. 4) where the braking member 60 is in contact with the wheel 45. The braking member 60 in the braking position 60 inhibits the rotation of the wheel 45 through engagement between the contact surface (braking surface) 61 of the braking member 60, which is to make contact with the wheel 45, and the contact surface 46 of the wheel 45, which is to make contact with the braking surface 61 of the braking member 60.

As shown in FIGS. 3 and 4, the wheel holding mechanism 40 further includes an operating member 70 located in a position in contact with the braking member 60. The operating member 70 makes contact with the braking member 60 on the opposite side of the braking member 60 from the wheel 45 in the axial direction ad of the wheel shaft 41. Thus, the braking member 60 is located between the operating member 70 and the wheel 45 in the axial direction ad of the wheel shaft 41.

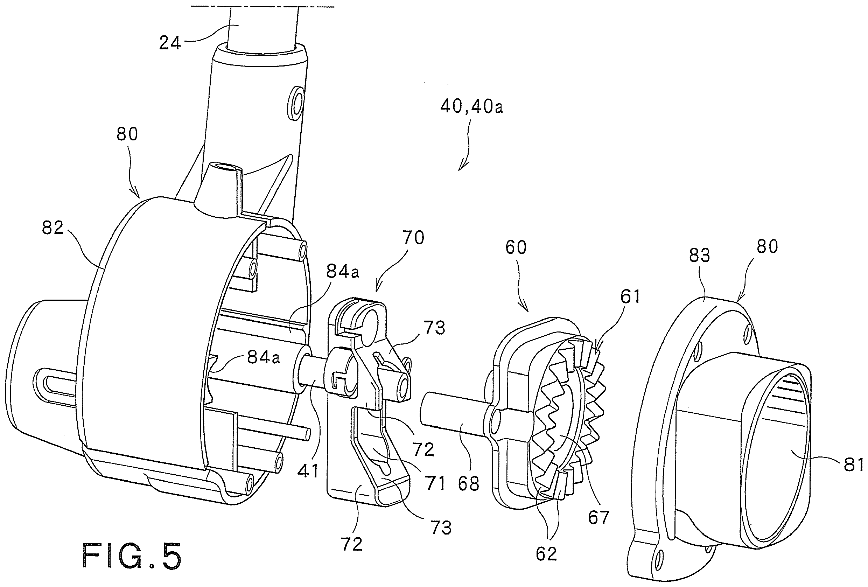

Further, as shown in FIGS. 2 through 6, the wheel holding mechanism 40 includes a casing 80 for housing the braking member 60. As shown in FIGS. 3, 4 and 6, the operating member 70 is also housed in the casing 80. As well shown in FIG. 5, the casing 80 has an opening (through-hole) 81 formed in a position facing the braking member 60 housed in the casing 80. The opening 81 is provided in a position facing the contact surface 61 of the braking member 60 in the axial direction ad of the wheel shaft 41. As shown in FIGS. 2 through 4, the contact surface 46 of the wheel 45, which is to make contact with the braking member 60, is inserted into the opening 81 and disposed in the casing 80.

In the embodiment shown in FIG. 5, the casing 80 consists of a casing body 82 mounted to the rear leg 24, and a casing lid 83 mounted to the casing body 82. The opening 81 which receives the portion of the wheel 45, having the contact surface 46, is formed in the casing lid 83.

The braking member 60, the wheel 45 and the operating member 70 will now be described in this order in greater detail with respect to their constructions and operations.

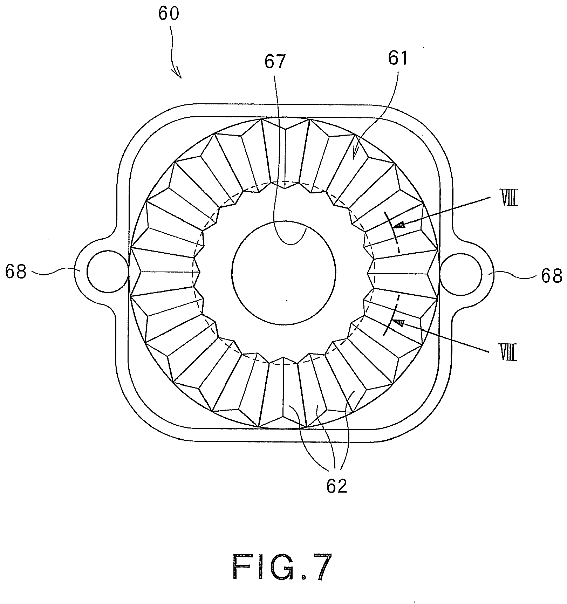

As shown in FIGS. 5 and 7, the braking member 60 has an opening (through-hole) 67 through which the wheel shaft 41 penetrates. Further, the braking member 60 includes a pair of side pieces 68 that engages the casing 80. The casing 80 has a pair of guide portions (guide grooves) 84a that engages the side pieces 68. As well shown in FIG. 7, the side pieces 68 extend from opposite peripheral portions of the braking member 60. As shown in FIG. 5, the side pieces 68 each have a cylindrical shape. On the other hand, the pair of guide portions 84a for receiving the side pieces 68 is provided in the casing body 82 at positions corresponding to the side pieces 68. The guide grooves 84a extend parallel to the axial direction of the wheel shaft 41 and are configured to be capable of receiving the side pieces 68. The braking member 60 is housed in the casing 80 with the side pieces 68 in engagement with the guide portions 84a. Accordingly, the braking member 60 can move in the casing 80 only in a direction parallel to the axial direction ad of the wheel shaft 41: The rotation of the braking member 60 on the axis of the wheel shaft 41 and the movement of the braking member 60 in a direction perpendicular to the axial direction ad of the wheel shaft 41 are inhibited.

The contact surface 61 of the braking member 60, which is to make contact with the wheel 45, is formed in a circumferential area around the opening 67. As shown in FIGS. 3, 4, 5 and 7, the contact surface 61 is configured as an uneven surface comprising a number of raised portions (first raised portions) 62. Particularly in the illustrated embodiment, the contact surface 61 is configured as an uneven surface consisting solely of the raised portions 62. As shown in FIG. 7, when the braking member 60 is viewed in the axial direction ad of the wheel shaft 41, the raised portions 62 extend radially around the wheel shaft 41, more strictly, around the center of rotation of the wheel 45. Thus, when the braking member 60 is viewed in the axial direction ad of the wheel shaft 41, the raised portions 62 extend along radial lines extending from the center of the wheel shaft 41 (the center of rotation of the wheel 45).

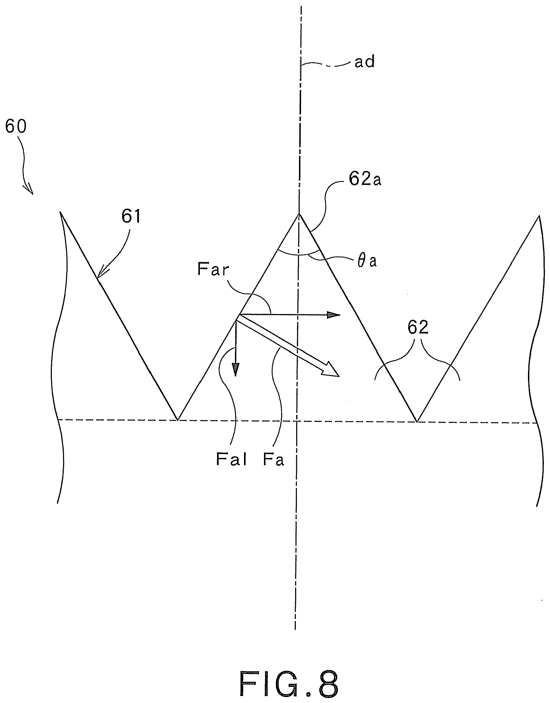

FIG. 8 shows a raised portion 62 in a cross-section perpendicular to the direction of the extension (longitudinal direction) of the raised portion 62, in other words, in a cross-section perpendicular to a radial line extending from the center of the wheel shaft 41. The cross-sectional shape of the raised portion 62 in the cross-section shown in FIG. 8 has an apex 62a projecting toward the wheel 45 in the axial direction ad of the wheel shaft 41. From the viewpoint of more securely inhibiting the rotation of the wheel 45 through engagement of the contact surface 61 of the braking member 60 with the wheel 45, the apex angle θa (see FIG. 8) at the apex 62a of the raised portion 62 in a cross-section perpendicular to the direction of the extension of the raised portion 62 is preferably more than 0° and less than 90°. In such a case, as shown in FIG. 8, a force Fa applied from the wheel 45 to the braking member 60 via the contact surface 61 is larger in the circumferential direction around the axis of the wheel shaft 41 than in the axial direction ad of the wheel shaft 41. Thus, when inhibiting the rotation of the wheel 45 by means of the braking member 60, a small force Fal presses on the braking member 60 in the axial direction ad of the wheel shaft 41, whereas a large force Far presses on the braking member 60 in the circumferential direction around the axis of the wheel shaft 41.

As described above, while the rotation of the braking member 60 on the axis of the wheel shaft 41 is inhibited in the casing 80, the braking member 60 is movable in the axial direction ad of the wheel shaft 41. When the braking member 60 is pressed by the wheel 45 and moved in the axial direction ad of the wheel shaft 41, the braking member 60 disengages from the wheel 45, whereby the braking of rotation of the wheel 45 is released. Therefore, in order to more securely inhibit the rotation of the wheel 45, the apex angle θa (see FIG. 8) at the apex 62a of the raised portion 62 is preferably set less than 90° so as to reduce the force Fal pressing on the braking member 60 in the axial direction ad of the wheel shaft 41.

As shown in FIG. 8, the cross-sectional shape of the raised portion 62 in a cross-section perpendicular to the direction of the extension of the raised portion 62 is a triangle, in particular an isosceles triangle, having the apex 62a projecting toward the wheel 45 in the axial direction ad of the wheel shaft 41. In the illustrated embodiment, the contact surface 61 of the braking member 60 consists of the raised portions 62 arranged radially without any space between them. The raised portions 62 forming the contact surface 61 all have the same construction. Accordingly, in a cross-section along a circumference around the axis of the wheel shaft 41, the contour of the contact surface 61 of the braking member 60 has the shape of a polygonal line composed of alternating two types of symmetrical lines inclined oppositely. With the contact surface 61 having such a construction, the wheel 45, upon contact with the braking member 60, can be rotated to a position where the wheel 45 engages the braking member 60. Thus, when the braking member 60 is caused to approach the wheel 45, positioning is performed automatically, irrespective of the rotational position of the wheel 45, such that the wheel 45 and the braking member 60 engage each other. This makes it possible to more stably inhibit the rotation of the wheel 45.

The terms used herein to specify shapes or geometric conditions, such as "triangle", "parallel", "perpendicular", "symmetrical", etc., should not be bound to their strict sense, and should be construed to include equivalents or resemblances from which the same function or effect can be expected.

The wheel 45 which is to engage the braking member 60 will now be described. As shown in FIG. 8, the wheel 45 comprises a wheel body 48 including a wheel 49a and a tire 49b mounted on the wheel 49a, and an adapter 50 mounted to the wheel body 48 at a position corresponding to the center of rotation. As shown in FIGS. 3 and 4, the adapter 50 provides the contact surface 46 of the wheel 45 which faces the braking member 60 in the axial direction ad of the wheel shaft 41, and makes contact with the braking member 60. With the provision of such adapter 50, the contact surface 46 of the wheel 45, to which a relatively large load is applied upon engagement with the braking member 60, can be made of a material difference from that of the other portion of the wheel 45. This is advantageous also in terms of possible reduction of the production cost.

As shown in FIGS. 2 through 4, at least part of the adapter 50 having the contact surface 46 is inserted into the opening 81 and disposed in the casing 80. Thus, contact of the braking member 60 with the wheel 45, caused by the sliding movement of the braking member 60, is made in the casing 80. This can effectively prevent foreign matter from being caught between the braking member 60 and the wheel 45, making it possible to more stably inhibit the rotation of the wheel 45.

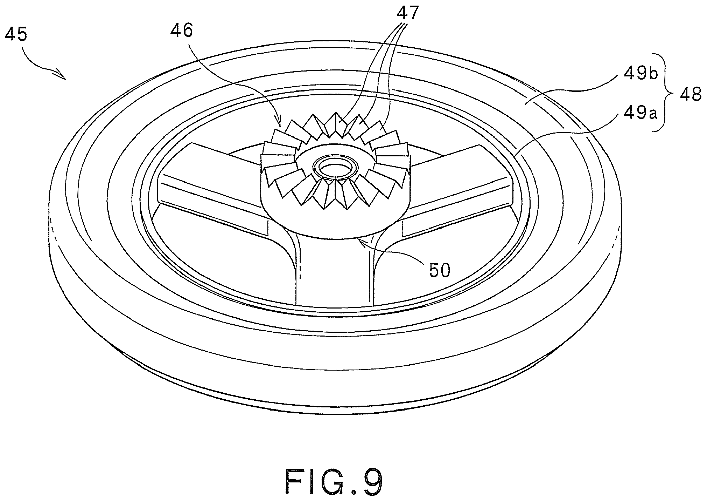

The contact surface 46 of the wheel 45, which is to make contact with the braking member 60, is formed in a circumferential area around the axis of the wheel shaft 41. As shown in FIG. 9, the contact surface 46 is configured as an uneven surface comprising a number of raised portions (second raised portions) 47. Particularly in the illustrated embodiment, the contact surface 46 is configured as an uneven surface consisting solely of the raised portions 47. As will be appreciated from FIG. 9, when the wheel 45 is viewed in the axial direction ad of the wheel shaft 41, the raised portions 47 extend radially around the wheel shaft 41, more strictly, around the center of rotation of the wheel 45. Thus, when the wheel 45 is viewed in the axial direction ad of the wheel shaft 41, the raised portions 47 extend along radial lines extending from the center of the wheel shaft 41 (the center of rotation of the wheel 45).

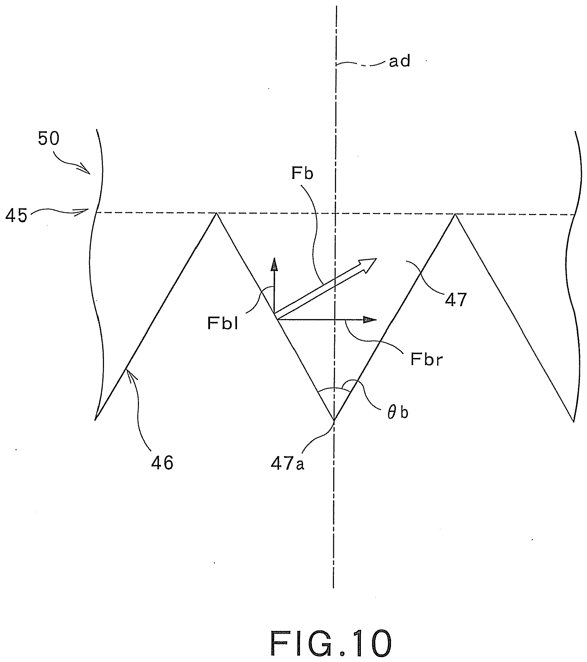

FIG. 10 shows a raised portion 47 in a cross-section perpendicular to the direction of the extension (longitudinal direction) of the raised portion 47, in other words, in a cross-section perpendicular to a radial line extending from the center of the wheel shaft 41. The cross-sectional shape of the raised portion 47 in the cross-section shown in FIG. 10 has an apex 47a projecting toward the braking member 60 in the axial direction ad of the wheel shaft 41. From the viewpoint of more securely inhibiting the rotation of the wheel 45 through engagement of the contact surface 46 of the wheel 45 with the braking member 60, the apex angle θb (see FIG. 10) at the apex 47a of the raised portion 47 in a cross-section perpendicular to the direction of the extension of the raised portion 47 is preferably more than 0° and less than 90°. In such a case, as shown in FIG. 10, a force Fb applied from the braking member 60 to the wheel 45 via the contact surface 46 is larger in the circumferential direction around the axis of the wheel shaft 41 than in the axial direction ad of the wheel shaft 41. Thus, when inhibiting the rotation of the wheel 45 by means of the braking member 60, a small force Fbl presses on the wheel 45 in the axial direction ad of the wheel shaft 41, whereas a large force Fbr presses on the wheel 45 in the circumferential direction around the axis of the wheel shaft 41. Accordingly, by setting the apex angle θb (see FIG. 10) at the apex 47a of the raised portion 47 less than 90°, the force applied from the braking member 60 to the wheel 45 can be effectively utilized as a force to inhibit the rotation of the wheel 45.

As shown in FIG. 10, the cross-sectional shape of the raised portion 47 in a cross-section perpendicular to the direction of the extension of the raised portion 47 is a triangle, in particular an isosceles triangle, having the apex 47a projecting toward the braking member 60 in the axial direction ad of the wheel shaft 41. In the illustrated embodiment, the contact surface 46 of the wheel 45 consists of the raised portions 47 arranged radially without any space between them. The raised portions 47 forming the contact surface 46 all have the same construction. Accordingly, in a cross-section along a circumference around the axis of the wheel shaft 41, the contour of the contact surface 46 of the wheel 45 has the shape of a polygonal line composed of alternating two types of symmetrical lines inclined oppositely. With the contact surface 46 having such a construction, the wheel 45, upon contact with the braking member 60, can be automatically rotated to a position where the wheel 45 engages the braking member 60. Thus, when the braking member 60 is caused to approach the wheel 45, positioning is performed automatically, irrespective of the rotational position of the wheel 45, such that the wheel 45 and the braking member 60 engage each other. This makes it possible to more stably inhibit the rotation of the wheel 45.

As shown in FIG. 4, the contact surface 46 of the wheel 45 and the contact surface 61 of the braking member 60, facing each other in the axial direction ad of the wheel shaft 41, are configured as complementary uneven surfaces: The contact surface 46 of the wheel 45 and the contact surface 61 of the braking member 60 are configured to be capable of engaging each other in a circumferential area around the axis of the wheel shaft 41. Upon the engagement of the braking member 60 with the wheel 45 in the circumferential area for braking of the wheel 45, a force to inhibit the rotation of the wheel 45 can be dispersed in the circumferential area. This makes it possible to very effectively prevent damage to the braking member 60 and the wheel 45 when they are in contact with each other. In addition, as will be appreciated from the foregoing description, the contact surface 46 of the wheel 45 has a three-dimensional structure which is rotationally symmetrical with respect to the axis of the wheel shaft 41. Similarly, the contact surface 61 of the braking member 60 has a three-dimensional structure which is rotationally symmetrical with respect to the axis of the wheel shaft 41. The braking member 60 and the wheel 45 can therefore engage each other regardless of the rotational position of the wheel 45. It therefore becomes possible to inhibit the rotation of the wheel 45 in a remarkably stable manner.

As shown in FIGS. 3 and 4, the wheel shaft 41 holding the wheel 45, together with the adapter 50 of the wheel 45, extends through the opening 41 into the casing 80. The wheel shaft 41 is held in a predetermined position in the casing 80. The wheel shaft 41 may be held by the casing 80 either rotatably on its axis or non-rotatably. The wheel 45 may be hold by the wheel shaft 41 either rotatably or non-rotatably. In the case where the wheel shaft 41 is held non-rotatably by the casing 80, the wheel 45 is rotatably mounted to the wheel shaft 41.

In the embodiment shown in FIGS. 3 and 4, the wheel shaft 41 of the right wheel holding mechanism 40a and the wheel shaft 41 of the left wheel holding mechanism 40b are comprised of the same single shaft member. Thus, the wheel shaft 41 extends in the width direction of the stroller 10, penetrating through both the casing 80 for the right wheel holding mechanism 40a and the casing 80 for the left wheel holding mechanism 40b. As shown in FIGS. 2 through 4, the above-described rear connecting member 19 extends between the right and left wheel holding mechanisms 40a, 40b; and the wheel shaft 41 extends between the wheel holding mechanisms 40a, 40b while passing through the cylindrical rear connecting member 19.

The operating member 70 will now be described. As shown in FIGS. 3 and 4, each operating member 70 is disposed in the casing 80 and is kept in contact with the braking member 60. The operating member 70 is movable in a direction intersecting the axial direction ad of the wheel shaft 41. By the movement of the operating member 70, the braking member 60 in contact with the operating member 70 slides on the wheel shaft 41 in the axial direction ad and approaches the wheel 45.

As shown in FIGS. 3 and 4, first biasing members 86 are provided in the casing 80. Each biasing member 86 extends between the interior wall of the casing 80 and a receiving portion 69 of the braking member 60 in a direction parallel to the axial direction ad of the wheel shaft 41, and biases the braking member 60 in a direction from the wheel 45 toward the operating member 70. In a specific example, the biasing member 86 is a compression spring, and the receiving portion 69 of the braking member 60 is configured as a spring receiving portion for receiving the compression spring. Accordingly, the operating member 70 in the casing 80 is pressed by the braking member 60 in a direction away from the wheel 45 and parallel to the axial direction ad of the wheel shaft 41.

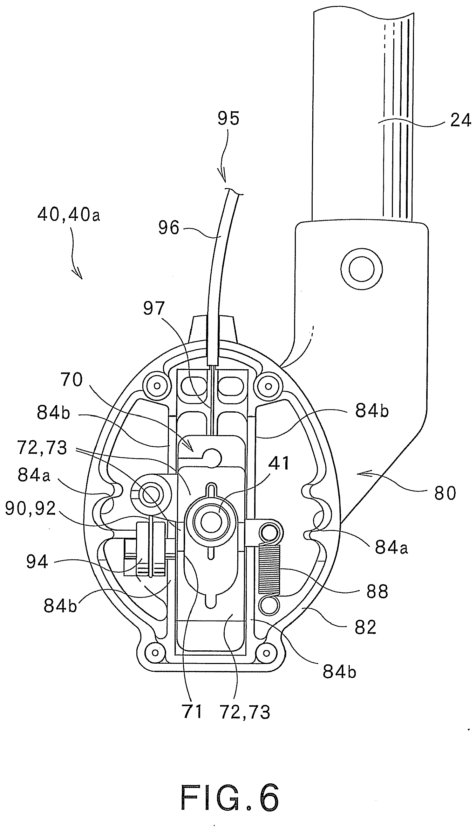

On the other hand, as shown in FIG. 6, the casing body 82 of the casing 80 is provided with a guide wall 84b for guiding the movement of the operating member 70. With the provision of the guide wall 84b and by the pressure of the braking member 60 in a direction parallel to the axial direction ad of the wheel shaft 41, the operating member 70 is slidable in only one direction in the casing 80.

As will be understood from comparison between FIG. 3 and FIG. 4, in the illustrated embodiment the operating member 70 moves in a direction perpendicular to the axial direction ad of the wheel shaft 41. Thus, in the illustrated embodiment, the movement direction of the operating member 70 is perpendicular to the movement direction (sliding direction) of the braking member 60 which is moved by the operating member 70. At least one of the operating member 70 and the braking member 60 has, as a contact surface to make contact with the other member, inclined portions 65, 73 inclined with respect to both the movement direction of the operating member 70 and the sliding direction of the braking member 60. The movement of the operating member 70 is converted via the inclined portions 65, 73 into the movement of the braking member 60.

As shown in FIGS. 3 through 6, in the illustrated embodiment the operating member 70 has two projecting pieces 72 projecting toward the braking member 60 in the axial direction ad of the wheel shaft 41. The two projecting pieces 72 are disposed at a distance along the movement direction of the operating member 70. Each projecting piece 72 has an inclined surface (inclined portion) 73 inclined with respect to both the movement direction of the operating member 70 and the sliding direction of the braking member 60.

On the other hand, as shown in FIGS. 3 and 4, the braking member 60 has two projecting pieces 64 projecting toward the operating member 70 in the axial direction ad of the wheel shaft 41. The projecting pieces 64 of the braking member 60 are located at positions facing the projecting pieces 72 of the operating member 70, and are kept in contact with the inclined surfaces 73 of the projecting portions 72 of the operating member 70 by the biasing force of the biasing member 86. Thus, the braking member 60 and the operating member 70 are in contact with each other in the projecting pieces 64, 72. When the operating member 70 moves in the predetermined movement direction, the projecting pieces 64 of the braking member 60, which are in contact with the inclined surfaces 73 of the operating member 70, are pressed by the inclined surfaces 73, and therefore the braking member 60 moves away from the main body of the operating member 70 and closer to the wheel 45 in the axial direction ad of the wheel shaft 41. Particularly in the illustrated embodiment, the projecting pieces 64 of the braking member 60 have inclined portions (inclined surfaces) 65 parallel to the inclined surfaces 73 of the operating member 70 and located at positions corresponding to the inclined surfaces 73. The inclined surfaces 65 of the braking member 60, which are kept in contact with the inclined surfaces 73 of the operating member 70, are configured to be slidable with respect to the inclined surfaces 73. Such a construction makes it possible to more stably convert the movement of the operating member 70 into the movement of the braking member 60 in the axial direction ad of the wheel shaft 41 without increasing the size of the wheel holding mechanism 40.

It thus becomes possible to slide the braking member 60 in the axial direction ad of the wheel shaft 41 by means of the operating member 70 which is movable in a direction intersecting the axial direction ad of the wheel shaft 41. By moving the operating member 70 in the particular movement direction, the braking member 60 can be slid in the axial direction ad of the wheel shaft 41 and brought into contact with the wheel 45. Thus, the rotation of the wheel 45 can be inhibited by moving the operating member 70 in the particular movement direction. According to this embodiment in which the braking member 60 is operated with the operating member 70 which is movable in the direction intersecting the axial direction ad of the wheel shaft 41, it also becomes possible to design the wheel holding mechanism 40 to be compact.

As described above, each braking member 60 is biased in a direction away from the wheel 45 by the first biasing member 86 provided in the casing 80. In addition, as shown in FIGS. 3, 4 and 6, the casing 80 is provided with second biasing members 88. Each second biasing member 88 biases the operating member 70 in one movement direction of the operating member 70, thereby causing the main body of the braking member 60 to approach the main body of the operating member 70. Therefore, when no external force is applied to the operating member 70, the main body of the braking member 60 and the main body of the operating member 70 are kept close to each other by the biasing forces of the first biasing member 86 and the second biasing member 88, as shown in FIG. 3. Thus, the wheel 45 is kept in a rotatable state.

In a specific example, the second biasing member 88 is comprised of a compression spring. The operating member 70 has been displaced by the second biasing member 88 in the one movement direction. As shown in FIGS. 3 and 4, the projecting pieces 64 of the braking member 60 and the projecting pieces 72 of the operating member 70 are constructed symmetrically between the right wheel holding mechanism 40a and the left wheel holding mechanism 40b. Further, when inhibiting the rotation of the wheels 45, the right and left operating members 70 move in opposite directions. Therefore, the right wheel holding mechanism 40a is biased downward in FIGS. 3 and 4, whereas the left wheel holding mechanism 40b is biased upward in FIGS. 3 and 4.

As shown in FIGS. 3 through 6, the operating member 70 has an opening (through-hole) 71. The wheel shaft 41 passes through the opening 71, thus penetrating through the operating member 70. The operating member 70 is movable in one direction intersecting the axial direction ad of the wheel shaft 41. Accordingly, as well shown in FIG. 6, the opening 71 of the operating member 70 has the shape of a long hole extending in the movement direction of the operating member 70. By thus disposing the wheel shaft 41 and the operating member 70 such that the wheel shaft 41 penetrates through the operating member 70, the movable operating member 70 can be disposed in the casing 80 without taking into consideration interference with the wheel shaft 41, making it possible to design the wheel holding mechanism 40 to be compact. Furthermore, it becomes possible to guide the movement of the operating member 70 by means of the wheel shaft 41, thereby stabilizing the movement of the operating member 70. This enables smooth switching between braking of the rotation of the wheel 45 and release of the braking.

As well shown in FIGS. 5 and 6, the operating member 70 is elongated in the movement direction, and the pair of side pieces 68 of the braking member 60 and the pair of guide portions 84a of the casing 80 extend on both sides of the elongated operating member 70 in the axial direction ad of the wheel shaft 41. By the engagement between the pair of side pieces 68 and the pair of guide portions 84a, both extending in the axial direction ad of the wheel shaft 41, the braking member 60, which is subjected to a large force in the direction of rotation upon braking of the rotation of the wheel 45, can be more securely prevented from moving in a direction other than the axial direction ad of the wheel shaft 41. Furthermore, the wheel holding mechanism 40, having the braking mechanism capable of stably inhibiting the rotation of the wheel 45, can be formed in a compact size.

As shown in FIG. 1, a remote control lever 100 is swingably mounted to the handle 36. Further, as shown in FIGS. 1, 2 and 6, an operation transmission means 95 is provided between the remote control lever 100 and the right wheel holding mechanism 40a. The operation transmission means 95 converts the swinging movement of the remote control lever 100 into the movement of the operating member 70 of the right wheel holding mechanism 40a. The operation transmission means 95 includes a tubular member 96 held on the stroller boy 11, and a lead wire 97 movably inserted into the tubular member 96. One end of the lead wire 97 is mounted to the remote control lever 100, while the other end of the lead wire 97 is mounted to the operating member 70 of the right wheel holding mechanism 40a. On the other hand, one end of the tubular member 96 is secured to the stroller body 11 in the vicinity of the remote control lever 100, while the other end of the tubular member 96 is secured to the casing 80 of the right wheel holding mechanism 40a, as shown in FIGS. 3, 4 and 6.

In operation, by swinging the remote control lever 100, the lead wire 97, whose one end is secured to the remote control lever 100, moves in the tubular member 96. In particular, by operating the remote control lever 100, the lead wire 97 moves in the tubular member 96 in a direction from the right wheel holding mechanism 40a toward the remote control lever 100. Accordingly, the operating member 70 of the right wheel holding mechanism 40a moves upward in FIG. 6. The movement of the operating member 70 brings the braking member 60 into contact with the wheel 45. Thus, the uneven contact surface 61 of the braking member 60 engages the uneven contact surface 46 of the wheel 45, whereby the rotation of the wheel 45 of the right wheel holding mechanism 40a is inhibited.

When the remote control lever 100 is swung in the opposite direction, the lead wire 97 moves in the tubular member 96 in a direction from the remote control lever 100 toward the right wheel holding mechanism 40a. Therefore, by the biasing forces of the first biasing member 86 and the second biasing member 88, the braking member 60 moves closer to the main body of the operating member 70. The braking member 60 therefore disengages from the wheel 45, whereby the braking of rotation of the wheel 45 is released. The use of the remote control lever 100 in combination with the operation transmission means 95 thus enable easy switching between braking of the rotation of the wheel 45 and release of the braking.

The wheel 45 is in the non-braked state when the remote control lever 100 is in a position extending in the longitudinal direction of the handle 36, as shown in FIG. 1, whereas the wheel 45 is in the braked state when the remote control lever 100 is in a position extending in a direction intersecting the longitudinal direction of the handle 36, as shown by the two-dot chain line in FIG. 1. A user of the stroller 10 can therefore easily check whether the rotation of the wheel 45 is inhibited, i.e. whether the stroller 10 is in the braked state.

In addition, as shown in FIGS. 3 and 4, an auxiliary transmission means 90 is provided between the right wheel holding mechanism 40a and the left wheel holding mechanism 40b. The auxiliary transmission means 90 converts the movement of the operating member 70 of the right wheel holding mechanism 40a into the movement of the operating member 70 of the left wheel holding mechanism 40b. The auxiliary transmission means 90 includes a tubular member 91 whose both ends are secured to the right and left wheel holding mechanisms 40a, 40b, and a lead wire 92 movably inserted into the tubular member 91. Both ends of the lead wire 92 are coupled to the operating members 70 of the right and left wheel holding mechanisms 40a, 40b.

Owing to the auxiliary transmission means 90, the rotation of the wheel 45 of the left wheel holding mechanism 40b is inhibited (braked) upon braking of the rotation of the wheel 45 of the right wheel holding mechanism 40a, and the braking of rotation of the wheel 45 of the left wheel holding mechanism 40b is released upon release of the braking of rotation of the wheel 45 of the right wheel holding mechanism 40a. Thus, by operating only the right wheel holding mechanism 40a, the left wheel holding mechanism 40b operates in conjunction with the right wheel holding mechanism 40a to simultaneously brake the rotation of the two wheels 45 or release the braking of the wheels 45. This makes it possible to easily and more securely switch the stroller 10 between the immovable state and the movable state. Further, the stroller 10 in the immovable state can be stably kept stationary regardless of the conditions of the road on which the stroller 10 is placed, for example, even when the stroller 10 is on a sloping road.

As shown in FIGS. 3, 4 and 6, in order to smooth the movement of the exposed lead wire 92 lying outside the tubular member 91, the casing 80 of each wheel holding mechanism 40 is provided with a pulley 94 to guide the lead wire 92. Braking of the rotation of the wheel 45 of the one wheel holding mechanism 40a or release of the braking of the wheel 45 can therefore be stably and smoothly transmitted to the other wheel holding mechanism 40b.

As described hereinabove, according to this embodiment, the wheel shaft 41 penetrates through the braking member 60 and the braking member 60 is slidable in the axial direction ad of the wheel shaft 41. Therefore, the braking member 60 and the wheel 45 can be brought into contact with each other in the circumferential area or at circumferentially spaced-apart positions around the axis of the wheel shaft 41. Accordingly, when inhibiting the rotation of the wheel 45, a large load can be prevented from being applied locally to a contact portion between the braking member 60 and the wheel 45. It therefore becomes possible to effectively prevent damage to the braking member 60 and the wheel 45 when they are in contact with each other. Moreover, the braking member 60 can make contact with the wheel 45 in the axial direction ad of the wheel shaft 41 irrespective of the rotational position of the wheel 45. This can reduce the burden of adjusting the rotational position of the wheel 45 in advance of braking of the wheel 45. As will be appreciated from the above, the wheel holding mechanism of this embodiment makes it possible to inhibit the rotation of the wheel 45 in a more stable manner.

In addition, it becomes possible to guide the sliding movement of the braking member 60 with the wheel shaft 41, thereby stabilizing the movement of the braking member 60. This enables smooth switching between braking of the rotation of the wheel 45 and release of the braking of the wheel 45. Furthermore, the slidable braking member 60 can be disposed without taking into consideration interference with the wheel shaft 41, making it possible to design the wheel holding mechanism 40 to be compact.

Furthermore, at least one of the contact surface 61 of the braking member 60 and the contact surface 46 of the wheel 45, facing each other, is configured as an uneven surface composed of a number of raised portions 62, 47 and, when viewed in the axial direction ad of the wheel shaft 41, the raised portions 62, 47 extend radially around the wheel shaft 41. Such a construction can achieve the following advantageous effects: The rotation of the wheel 45 can be inhibited more stably without pre-adjustment of the rotational position of the wheel 45. Further, a force to inhibit the rotation of the wheel 45 can be dispersed among a plurality of sites (raised portions) and/or a local force to inhibit the rotation of the wheel 45 can be prevented from being constantly applied to a particular site (a particular raised portion). It therefore becomes possible to prevent damage to the raised portions 62 of the braking member 60 and the raised portions 47 of the wheel 45 when the raised portions 62, 47 are in contact with each other, thereby more stably inhibiting the rotation of the wheel 45.

Various changes and modifications may be made to the above-described embodiment. The following are some exemplary variations.

Though in the above-described embodiment the contact surface 61 of the braking member 60 and the contact surface 46 of the wheel 45, facing each other in the axial direction ad of the wheel shaft 41, are configured as complementary uneven surfaces, the present invention is not limited to this feature. Further, the above-described constructions of the contact surface 61 of the braking member 60 and the contact surface 46 of the wheel 45 are merely illustrative and may be modified. For example, at least one of the contact surface 61 of the braking member 60 and the contact surface 46 of the wheel 45 may be configured as an uneven surface having raised portions 62, 47 arranged with a space between adjacent raised portions. Further, the raised portions 62, 47 may not necessarily be arranged radially; for example, they may be arranged in a stripe pattern. The cross-sectional shape of the raised portions is not limited to a triangle; for example, they may have a quadrangular cross-sectional shape.

In the above-described embodiment the movement direction of the operating member 70 is perpendicular to the axial direction ad of the wheel shaft 41. However, the movement direction of the operating member 70 may intersect the axial direction ad of the wheel shaft 41 at an angle other than 90°, in other words, may be inclined with respect to the axial direction ad of the wheel shaft 41. Further, various modifications can be made to the above-described constructions of the contact portions 72, 73, 64, 65 of the operating member 70 and the braking member 60 if the movement of the operating member 70 can be converted into the movement of the braking member 60 in the axial direction ad of the wheel shaft 41. It may be possible to even omit the operating member 70 and directly operate the braking member 60.

The above-described constructions of the auxiliary transmission means 90, the operation transmission means 95 and the remote control lever 100 are merely illustrative and may be appropriately modified, e.g. in their locations. It may be possible to even omit one or more of the auxiliary transmission means 90, the operation transmission means 95 and the remote control lever 100. For example, it is possible to dispose the operating member 70 such that a part thereof lies outside the casing 80 so that the operating member 70 can be operated directly. Alternatively, it is possible to omit the auxiliary transmission means 90, and to connect the remote control lever 100 to the two wheel holding mechanisms 40 via two operation transmission means 95. Alternatively, it is possible to omit the auxiliary transmission means 90, and to separately operate the two wheel holding mechanisms 40.

The above-described wheel holding mechanisms 40 may be mounted to the front legs 22, or mounted to the front legs 22 and the rear legs 24. It is also possible to mount the wheel holding mechanism 40 to only one of the rear legs 24.

The above-described construction of the stroller body 11 of the stroller 10 is merely illustrative and may be modified. For example, the frame portion 20 may be configured to be non-foldable. Though in the above-described embodiment the handle 36 is configured to be swingable between a backside pushing position and a face-to-face pushing position, the present invention is not limited to this feature: The handle 36 may be configured to be non-swingable and fixed in a backside pushing position.

The modifications described above can of course be made in an appropriate combination to the above-described embodiment.

## Claims

1. A stroller wheel holding mechanism comprising:
a wheel shaft (41);
a wheel (45) mounted to the wheel shaft (41);
a braking member (60) through which the wheel shaft (41) penetrates and which is slidable with respect to the wheel shaft (41)in an axial direction of the wheel shaft (41),
and **characterized in that** the stroller wheel holding mechanism further comprises a casing (80) for housing the braking member (60),
wherein the braking member (60), by its sliding movement in the axial direction of the wheel shaft (41), is movable between a position where the braking member (60) is apart from the wheel (45) and a position where the braking member (60) is in contact with the wheel (45) and inhibits a rotation of the wheel (45),
wherein a surface of the braking member (60), facing the wheel (45) in the axial direction of the wheel shaft (41), and a surface of the wheel (45), facing the braking member (60) in the axial direction of the wheel shaft (41), are configured as complementary uneven surfaces capable of engaging each other in a circumferential area around the wheel shaft (41);
wherein the casing (80) has an opening (81) formed in a position facing the braking member (60), and
wherein a portion of the wheel (45), which is to make contact with the braking member (60), is inserted into the opening (81) and disposed in the casing (80).

2. The stroller wheel holding mechanism according to claim 1,
wherein a surface of the braking member (60), facing the wheel (45) in the axial direction of the wheel shaft (41), is configured as an uneven surface composed of a number of raised portions which, when viewed in the axial direction of the wheel shaft (41), extend radially around the wheel shaft (41).

3. The stroller wheel holding mechanism according to claim 2,
wherein a cross-sectional shape of each raised portion in a cross-section perpendicular to a direction of the extension of the raised portion is a triangle having an apex projecting toward the wheel (45), or
wherein a cross-sectional shape of each raised portion in a cross-section perpendicular to a direction of the extension of the raised portion has an apex projecting toward the wheel (45) and having an apex angle of less than 90°.

4. The stroller wheel holding mechanism according to any one of claims 1 to 3,
wherein a surface of the wheel (45), facing the braking member (60) in the axial direction of the wheel shaft (41), is configured as an uneven surface composed of a number of raised portions which, when viewed in the axial direction of the wheel shaft (41), extend radially around the wheel shaft (41).

5. The stroller wheel holding mechanism according to claim 4,
wherein a cross-sectional shape of each raised portion in a cross-section perpendicular to a direction of the extension of the raised portion is a triangle having an apex projecting toward the braking member (60), or
wherein a cross-sectional shape of each raised portion in a cross-section perpendicular to a direction of the extension of the raised portion has an apex projecting toward the braking member (60) and having an apex angle of less than 90°.

6. The stroller wheel holding mechanism according to claim 1,
wherein the wheel (45) includes a wheel body, and an adapter mounted to the wheel body, and
wherein the adapter forms said surface of the wheel (45), facing the braking member (60) in the axial direction of the wheel shaft (41).

7. The stroller wheel holding mechanism according to claim 1, further comprising an operating member (70) located in a position in contact with the braking member (60) on an opposite side of the braking member (60) from the wheel (45) in the axial direction of the wheel shaft (41),
wherein the operating member (70) is movable in a direction intersecting the axial direction of the wheel shaft (41) and, by the movement of the operating member in said direction, the braking member (60) in contact with the operating member can slide on the wheel shaft (41) in the axial direction and approach the wheel (45).

8. The stroller wheel holding mechanism according to claim 7,
wherein the wheel shaft (41) penetrates through the operating member.

9. The stroller wheel holding mechanism according to claim 7,
wherein at least one of the operating member (70) and the braking member (60) has, as a contact surface to make contact with the other member, an inclined portion inclined with respect to both the movement direction of the operating member (70) and the sliding direction of the braking member (60).

10. The stroller wheel holding mechanism according to claim 1,
wherein the braking member (60) is biased in a direction away from the wheel (45) and parallel to the axial direction of the wheel shaft (41).

11. A stroller comprising:
a handle (36);
a front leg (22) and a rear leg (24); and
a wheel holding mechanisms according to claim 1, mounted to at least one of the front leg (22) and the rear leg (24).

12. The stroller according to claim 11, further comprising
a remote control lever (100) swingably mounted to the handle (36), and
an operation transmission means (95) provided between the remote control lever (100) and the wheel holding mechanism so as to enable switching between braking of the rotation of the wheel (45) and release of the braking by means of the remote control lever (100),
wherein the wheel (45) is in a non-braked state when the remote control lever (100) is in a position extending in a longitudinal direction of the handle (36).

13. A stroller comprising:
a handle (36); and
a front leg (22) and a pair of rear legs (24),
wherein one of the pair of rear legs (24) is provided with a first wheel holding mechanism according to claim 1 and the other one of the pair of rear legs (24) is provided with a second wheel holding mechanism according to claim 1,
wherein an auxiliary transmission means (90) is provided between the first wheel holding mechanism and the second wheel holding mechanism, and
wherein the rotation of the wheel (45) of the second wheel holding mechanism is inhibited upon braking of the rotation of the wheel (45) of the first wheel holding mechanism, and the braking of rotation of the wheel (45) of the second wheel holding mechanism is released upon release of the braking of rotation of the wheel (45) of the first wheel holding mechanism.

## Patentansprüche

1. Radhaltemechanismus für einen Kinderwagen umfassend:
eine Radwelle (41);
ein Rad (45), das an der Radwelle (41) montiert ist;
ein Bremselement (60), durch welches die Radwelle (41) hindurch verläuft, und welches bezüglich der Radwelle (41) in einer axialen Richtung der Radwelle (41) verschiebbar ist, und
**dadurch gekennzeichnet, dass** der Radhaltemechanismus für den Kinderwagen ferner ein Gehäuse (80) zum Aufnehmen des Bremselements (60) umfasst, wobei das Bremselement (60) durch seine Verschiebebewegung in der axialen Richtung der Radwelle (41) zwischen einer Position, wo das Bremselement (60) von dem Rad (45) entfernt ist, und einer Position, wo das Bremselement (60) das Rad (45) berührt und eine Drehung des Rads (45) hemmt, beweglich ist,
wobei eine Fläche des Bremselements (60), die dem Rad (45) in der axialen Richtung der Radwelle (41) gegenüberliegt, und eine Fläche des Rads (45), die dem Bremselement (60) in der axialen Richtung der Radwelle (41) gegenüberliegt, als komplementäre unebene Flächen ausgebildet sind, die in der Lage sind, in einem Umfangsbereich um die Radwelle (41) herum ineinander einzugreifen;
wobei das Gehäuse (80) eine Öffnung (81) aufweist, die in einer Position gebildet ist, die dem Bremselement (60) gegenüberliegt, und
wobei ein Abschnitt des Rads (45), welcher mit dem Bremselement (60) in Kontakt kommt, in die Öffnung (81) eingeführt ist und in dem Gehäuse (80) platziert ist.

2. Radhaltemechanismus für einen Kinderwagen nach Anspruch 1, wobei eine Fläche des Bremselements (60), die dem Rad (45) in der axialen Richtung der Radwelle (41) gegenüberliegt, als eine unebene Fläche ausgebildet ist, die aus mehreren erhöhten Abschnitten besteht, welche sich in der axialen Richtung der Radwelle (41) gesehen radial um die Radwelle (41) herum erstrecken.

3. Radhaltemechanismus für einen Kinderwagen nach Anspruch 2, wobei eine Querschnittsform jedes erhöhten Abschnitts in einem Querschnitt senkrecht zu einer Richtung der Erstreckung des erhöhten Abschnitts ein Dreieck ist, das einen Scheitelpunkt aufweist, der zu dem Rad (45) hin vorsteht, oder
wobei eine Querschnittsform jedes erhöhten Abschnitts in einem Querschnitt senkrecht zu einer Richtung der Erstreckung des erhöhten Abschnitts einen Scheitelpunkt aufweist, der zu dem Rad (45) hin vorsteht und einen Scheitelpunktwinkel von weniger als 90° aufweist.

4. Radhaltemechanismus für einen Kinderwagen nach einem der Ansprüche 1 bis 3, wobei eine Fläche des Rads (45), die dem Bremselement (60) in der axialen Richtung der Radwelle (41) gegenüberliegt, als eine unebene Fläche ausgebildet ist, die aus mehreren erhöhten Abschnitten besteht, welche sich in der axialen Richtung der Radwelle (41) gesehen radial um die Radwelle (41) herum erstrecken.

5. Radhaltemechanismus für einen Kinderwagen nach Anspruch 4, wobei eine Querschnittsform jedes erhöhten Abschnitts in einem Querschnitt senkrecht zu einer Richtung der Erstreckung des erhöhten Abschnitts ein Dreieck ist, das einen Scheitelpunkt aufweist, der zu dem Bremselement (60) hin vorsteht, oder wobei eine Querschnittsform jedes erhöhten Abschnitts in einem Querschnitt senkrecht zu einer Richtung der Erstreckung des erhöhten Abschnitts einen Scheitelpunkt aufweist, der zu dem Bremselement (60) hin vorsteht und einen Scheitelpunktwinkel von weniger als 90° aufweist.

6. Radhaltemechanismus für einen Kinderwagen nach Anspruch 1, wobei das Rad (45) einen Radkörper und einen Adapter, der an dem Radkörper montiert ist, aufweist, und wobei der Adapter die Fläche des Rads (45) bildet, die dem Bremselement (60) in der axialen Richtung der Radwelle (41) gegenüberliegt.

7. Radhaltemechanismus für einen Kinderwagen nach Anspruch 1, ferner umfassend ein Bedienelement (70), das sich in einer Position befindet, die das Bremselement (60) auf einer dem Rad (45) gegenüberliegenden Seite des Bremselements (60) in der axialen Richtung der Radwelle (41) berührt,
wobei das Bedienelement (70) in einer Richtung beweglich ist, die die axiale Richtung der Radwelle (41) schneidet, und wobei durch die Bewegung des Bedienelements in der Richtung das Bremselement (60), das das Bedienelement berührt, auf der Radwelle (41) in der axialen Richtung gleiten und sich dem Rad (45) annähern kann.

8. Radhaltemechanismus für einen Kinderwagen nach Anspruch 7, wobei die Radwelle (41) durch das Bedienelement hindurch verläuft.

9. Radhaltemechanismus für einen Kinderwagen nach Anspruch 7, wobei mindestens eines des Bedienelements (70) und des Bremselements (60) als Kontaktfläche zum Herstellen eines Kontakts mit dem anderen Element einen geneigten Abschnitt aufweist, der sowohl in Bezug auf die Bewegungsrichtung des Bedienelements (70) als auch in Bezug auf die Verschiebungsrichtung des Bremselements (60) geneigt ist.

10. Radhaltemechanismus für einen Kinderwagen nach Anspruch 1, wobei das Bremselement (60) in einer Richtung von dem Rad (45) weg und parallel zu der axialen Richtung der Radwelle (41) vorgespannt ist.

11. Kinderwagen umfassend:
einen Griff (36);
ein Vorderbein (22) und ein Hinterbein (24); und
einen Radhaltemechanismus nach Anspruch 1, der an mindestens einem des Vorderbeins (22) und des Hinterbeins (24) montiert ist.

12. Kinderwagen nach Anspruch 11, ferner umfassend
einen Fernsteuerungshebel (100), der schwenkbar an dem Griff (36) montiert ist, und ein Betriebsübertragungsmittel (95), das zwischen dem Fernsteuerungshebel (100) und dem Radhaltemechanismus bereitgestellt ist, um ein Schalten zwischen dem Bremsen der Drehung des Rads (45) und dem Freigeben des Bremsens durch den Fernsteuerungshebel (100) zu ermöglichen, wobei sich das Rad (45) in einem nicht gebremsten Zustand befindet, wenn sich der Fernsteuerungshebel (100) in einer Position befindet, die sich in einer Längsrichtung des Griffs (36) erstreckt.

13. Kinderwagen umfassend:
einen Griff (36); und
ein Vorderbein (22) und ein Paar an Hinterbeinen (24), wobei eines der Hinterbeine (24) mit einem ersten Radhaltemechanismus nach Anspruch 1 versehen ist und das andere an Hinterbein (24) mit einem zweiten Radhaltemechanismus nach Anspruch 1 versehen ist,
wobei ein Hilfsübertragungsmittel (90) zwischen dem ersten Radhaltemechanismus und dem zweiten Radhaltemechanismus bereitgestellt ist, und wobei die Drehung des Rads (45) des zweiten Radhaltemechanismus nach dem Bremsen der Drehung des Rads (45) des ersten Radhaltemechanismus gehemmt wird, und das Bremsen der Drehung des Rads (45) des zweiten Radhaltemechanismus nach dem Freigeben des Bremsens der Drehung des Rads (45) des ersten Radhaltemechanismus freigegeben wird.

## Revendications

1. Mécanisme de maintien de roue de poussette comprenant :
un arbre de roue (41) ;
une roue (45) montée sur l'arbre de roue (41) ;
un élément de freinage (60) à travers lequel l'arbre de roue (41) pénètre et qui peut coulisser par rapport à l'arbre de roue (41) dans une direction axiale de l'arbre de roue (41), et
**caractérisé en ce que** le mécanisme de maintien de roue de poussette comprend en outre :
un boîtier (80) pour loger l'élément de freinage (60),
dans lequel l'élément de freinage (60), par son mouvement de coulissement dans la direction axiale de l'arbre de roue (41), est mobile entre une position dans laquelle l'élément de freinage (60) est éloigné de la roue (45) et une position dans laquelle l'élément de freinage (60) est en contact avec la roue (45) et empêche une rotation de la roue (45),
dans lequel une surface de l'élément de freinage (60), faisant face à la roue (45) dans la direction axiale de l'arbre de roue (41), et une surface de la roue (45), faisant face à l'élément de freinage (60) dans la direction axiale de l'arbre de roue (41), sont configurées comme étant des surfaces irrégulières complémentaires pouvant se mettre en prise entre elles dans une zone circonférentielle autour de l'arbre de roue (41) ;
dans lequel le boîtier (80) a une ouverture (81) formée dans une position faisant face à l'élément de freinage (60), et
dans lequel une partie de la roue (45), qui est prévue pour établir le contact avec l'élément de freinage (60), est insérée dans l'ouverture (81) et disposée dans le boîtier (80).

2. Mécanisme de maintien de roue de poussette selon la revendication 1,
dans lequel une surface de l'élément de freinage (60), faisant face à la roue (45) dans la direction axiale de l'arbre de roue (41), est configurée comme étant une surface irrégulière composée d'un certain nombre de parties relevées qui, lorsqu'elles sont observées dans la direction axiale de l'arbre de roue (41), s'étendent radialement autour de l'arbre de roue (41).

3. Mécanisme de maintien de roue de poussette selon la revendication 2,
dans lequel une forme transversale de chaque partie relevée en coupe perpendiculaire à une direction de l'extension de la partie relevée est un triangle ayant un sommet faisant saillie vers la roue (45), ou
dans lequel une forme transversale de chaque partie relevée dans une coupe perpendiculaire à une direction de l'extension de la partie relevée a un sommet faisant saillie vers la roue (45) et ayant un angle de sommet inférieur à 90°.

4. Mécanisme de maintien de roue de poussette selon l'une quelconque des revendications 1 à 3,
dans lequel une surface de la roue (45), faisant face à l'élément de freinage (60) dans la direction axiale de l'arbre de roue (41), est configurée comme étant une surface irrégulière composée d'un certain nombre de parties relevées qui, lorsqu'elles sont observées dans la direction axiale de l'arbre de roue (41), s'étendent radialement autour de l'arbre de roue (41).

5. Mécanisme de maintien de roue de poussette selon la revendication 4,
dans lequel une forme transversale de chaque partie relevée dans une coupe perpendiculaire à une direction de l'extension de la partie relevée est un triangle ayant un sommet faisant saillie vers l'élément de freinage (60), ou
dans lequel une forme transversale de chaque partie relevée dans une coupe perpendiculaire à une direction de l'extension de la partie relevée a un sommet faisant saillie vers l'élément de freinage (60) et ayant un angle de sommet inférieur à 90°.

6. Mécanisme de maintien de roue de poussette selon la revendication 1,
dans lequel la roue (45) comprend un corps de roue, et un adaptateur monté sur le corps de roue, et
dans lequel l'adaptateur forme ladite surface de la roue (45), faisant face à l'élément de freinage (60) dans la direction axiale de l'arbre de roue (41).

7. Mécanisme de maintien de roue de poussette selon la revendication 1, comprenant en outre un élément de commande (70) positionné dans une position en contact avec l'élément de freinage (60) sur un côté opposé de l'élément de freinage (60) par rapport à la roue (45) dans la direction axiale de l'arbre de roue (41),
dans lequel l'élément de commande (70) est mobile dans une direction coupant la direction axiale de l'arbre de roue (41), et par le mouvement de l'élément de commande dans ladite direction, l'élément de freinage (60) en contact avec l'élément de commande peut coulisser sur l'arbre de roue (41) dans la direction axiale et se rapprocher de la roue (45).

8. Mécanisme de maintien de roue de poussette selon la revendication 7,
dans lequel l'arbre de roue (41) pénètre à travers l'élément de commande.

9. Mécanisme de maintien de roue de poussette selon la revendication 7,
dans lequel au moins l'un parmi l'élément de commande (70) et l'élément de freinage (60) a, en tant que surface de contact pour établir le contact avec l'autre élément, une position inclinée, inclinée à la fois par rapport à la direction de mouvement de l'élément de commande (70) et à la direction de coulissement de l'élément de freinage (60).

10. Mécanisme de maintien de roue de poussette selon la revendication 1,
dans lequel l'élément de freinage (60) est sollicité dans une direction à distance de la roue (45) et parallèle à la direction axiale de l'arbre de roue (41).

11. Poussette comprenant :
une poignée (36) ;
une jambe avant (22) et une jambe arrière (24) ; et
un mécanisme de maintien de roue selon la revendication 1, monté sur au moins l'une parmi la jambe avant (22) et la jambe arrière (24).

12. Poussette selon la revendication 11, comprenant en outre :
un levier de commande à distance (100) monté, de manière oscillante, sur la poignée (36), et
un moyen de transmission d'opération (95) prévu entre le levier de commande à distance (100) et le mécanisme de maintien de roue pour permettre la commutation entre le freinage de la rotation de la roue (45) et le relâchement du freinage au moyen du levier de commande à distance (100),
dans laquelle la roue (45) est dans un état non freiné, lorsque le levier de commande à distance (100) est dans une position s'étendant dans une direction longitudinale de la poignée (36).

13. Poussette comprenant :
une poignée (36) ; et
une jambe avant (22) et une paire de jambes arrière (24),
dans laquelle l'une de la paire de jambes arrière (24) est prévue avec un premier mécanisme de maintien de roue selon la revendication 1 et l'autre de la paire de jambes arrière (24) est prévue avec un second mécanisme de maintien de roue selon la revendication 1,
dans laquelle un moyen de transmission auxiliaire (90) est prévu entre le premier mécanisme de maintien de roue et le second mécanisme de maintien de roue, et
dans laquelle la rotation de la roue (45) du second mécanisme de maintien de roue est empêchée suite au freinage de la rotation de la roue (45) du premier mécanisme de maintien de roue, et le freinage de la rotation de la roue (45) du second mécanisme de maintien de roue est relâché suite au relâchement du freinage de rotation de la roue (45) du premier mécanisme de maintien de roue.
